# EUROPEAN PATENT APPLICATION

(11) **EP 0 993 217 A1**
(43) Date of publication of application: **12.04.2000**
(21) Application number: 99307787.4
(22) Date of filing: 01.10.1999
(51) Int. Cl.: H04Q 11/04

(54) **Method and apparatus for providing a connectionless cell switch maitaining cell sequence integrity**

(30) Priority: 01.10.1998 US 164945
(71) Applicant: NORTEL NETWORKS CORPORATION, Montreal, Quebec H2Y 3Y4 (CA)
(72) Inventor: Bottorff, Paul, Santa Clara, California 95052 (US)
(74) Representative: Dearling, Bruce Clive

(57) **Abstract**

A method and apparatus (205) providing a connectionless cell scheduler (316). In the described embodiment, a switch (312) is provided which detects the end of frame in a cell stream (103,104) and a scheduler (311,316) assures that the end of frame is transmitted before any frame from another cell stream is transmitted (414, 425). Thus, cell stream ordering is retained.

## Description

### FIELD OF THE INVENTION

The present invention relates to the field of telecommunications and is particularly, but not exclusively, applicable to the maintenance of cell sequencing in a broadband (packet-based) cell transmission environment, such as ATM.

### DESCRIPTION OF THE RELATED ART

In a cell based networking technology, such as asynchronous transfer mode (ATM), a set of information (e.g. a packet) is divided into fixed length cells and transported through the network from a source to a destination where the packet is reassembled. Numerous technologies have been proposed to address the issue of disassembly and reassembly of the packets. Perhaps most pertinent are technologies referred to as ATM adaptation layer (AAL). In general, the AAL technologies are divided based on three parameters - (1) whether the timing relationship between the source and destination is required or not, (2) whether the bit rate is constant or variable, and (3) the form of connection mode (i.e. connection-oriented or connectionless), - and into four classes A, B, C and D.

AAL Type 3/4 were designed to work with both connection-oriented and connectionless technologies. In order to work in connectionless networks, AAL Type 3/4 cells carried significant overhead in their headers including source and destination information, CRC checks, etc. While carrying this overhead is burdensome in terms of efficiency for data carrying, it does allow for reconstruction of a packet at the edge of a cell network even if the two or more streams of cells are merged because the source/destination information is provided in the cell header.

AAL Type 5 was introduced and addressed some of the inefficiency issues of AAL Type 3/4 but in doing so AAL Type 5 did not provide a mechanism for allowing connectionless service over ATM (i.e. the information allowing sequencing of streams was removed from the cell headers so that reconstruction of the packets at the edge is dependent on the cells being received in sequence).

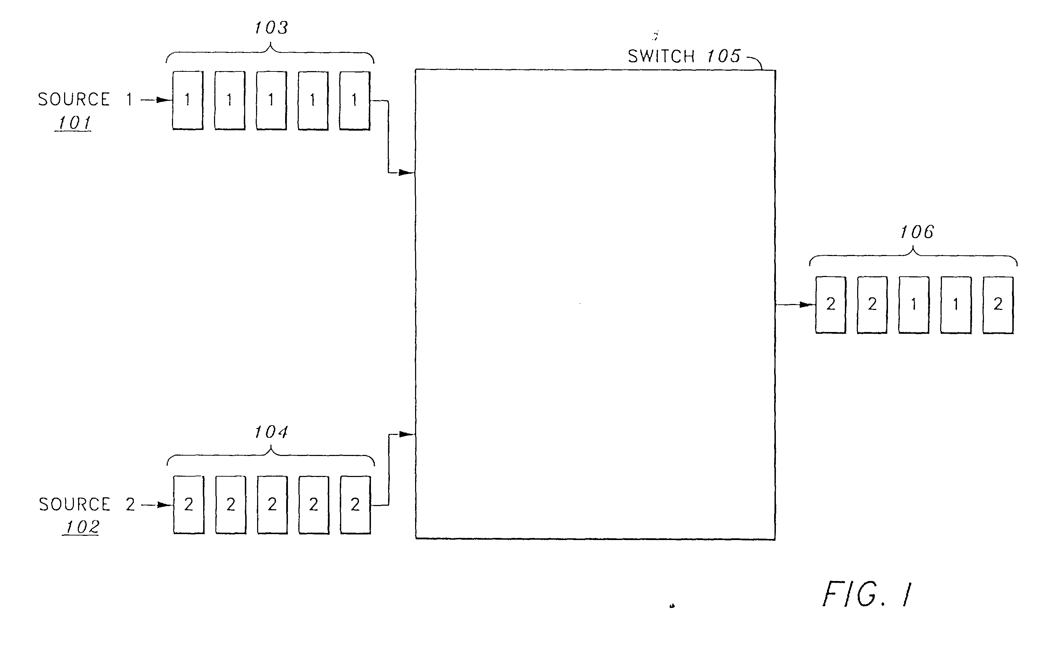

Thus, if streams of cells are merged in a switch using AAL Type 5, cell sequencing information is lost. This is illustrated by Figure 1 which shows two streams of cells 103, 104 from two sources 101, 102 entering a switch 105. A single output stream 106 is provided. As can be seen, the output does not preserve cell sequencing information. Because AAL Type 5 cells output in the output stream 106 all share the same VC (virtual channel) information, it is not possible to determine the input stream of the cells from the output stream and, thus, it is not possible to reliably reassemble AAL Type 5 cells if the input streams are merged.

Thus, AAL Type 5 technology has traditionally been used for connection-oriented networks - not connectionless networks.

Thus, what is needed is a method and apparatus reducing the need to carrying significant overhead in a cell header and still allowing use of connectionless networks for transport of cells, together with reliable reassembly of cells at the destination.

### SUMMARY OF THE INVENTION

A method of cell scheduling receiving a cell stream having a plurality of cells of a first type (e.g. not end of frame cells) and an end of frame cell. The end of frame cell is detected and, subsequent to detecting the end of frame cell, an indication is made that the cell stream is ready for retransmission. In a cut-through alternative embodiment, cells from the cell stream are retransmitted before the end of frame cell is detected; however, cells from other cell streams are blocked from transmission until the end of frame cell in the first cell stream is transmitted.

In a first aspect of the present invention there is provided a method of cell scheduling comprising receiving a cell stream having a plurality of cells of a first type and an end of frame cell; detecting the end of frame cell; and indicating the cell stream is ready for retransmission after detecting the end of frame cell.

In another aspect of the present invention there is provided a method of switching cells comprising the steps of: receiving a first cell in a frame delimited cell stream on a first input port of a switch; switching the first cell to an output port of the switch; and scheduling transmission on the output port of the switch to select only cells received on the first port until an EOF cell is detected in the cell stream.

In a further aspect of the present invention there is provided a method of switching cells comprising the steps of: receiving on a first port a first frame delimited cell stream, the first frame delimited cell stream destined for destination A; receiving on a second port a second frame delimited cell stream, the second frame delimited cell stream destined for destination A; and buffering the second frame delimited cell stream until a frame delimiter of the first frame delimited cell stream is transmitted on a third port.

In still yet another aspect of the present invention there is provided a cell switch comprising: a first input port coupled to receive a first frame delimited cell stream; a second input port coupled to receive a second frame delimited cell stream; a buffer coupled to at least one input port for temporarily storing the frame delimited cell streams; an end of frame detector coupled to examine cells received on the input ports; an output port on which the first and second frame delimited cell streams are interleaved; and a scheduler, responsive to the end of frame detector, coupled to control transmission of cells on the output port.

### BRIEF DESCRIPTION OF THE DRAWINGS

Exemplary embodiments of the present invention will now be described with reference to the accompanying drawings, in which:

Figure 1 is a block diagram illustrating a prior art switch.

Figure 2 is a block diagram illustrating a switch as may implement a preferred embodiment of the present invention.

Figure 3 is a block diagram illustrating further details of a switch as may implement a preferred embodiment of the present invention.

Figure 4(a)-(c) are flow diagrams illustrating methods of operation of an embodiment of the invention.

### DETAILED DESCRIPTION OF THE EMBODIMENTS OF THE PRESENT INVENTION

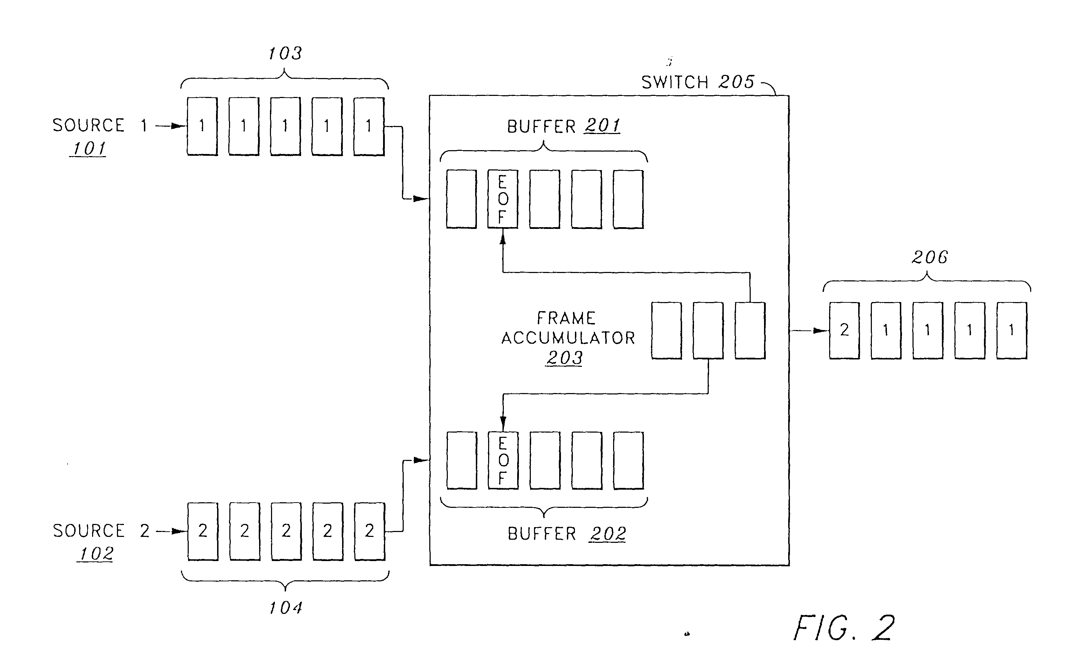

It is desirable to provide for maintaining cell sequencing in a connectionless cell transmission environment. Figure 2 illustrates a high level conceptual diagram of a cell switch which provides for maintaining cell sequencing in accordance with the broad concepts of the present invention. In particular, in the described embodiment, two cell streams 103 and 104 are received by a switch 205. Each cell stream represents a data flow or packet which is segmented by the transmitting device into a plurality of cells and which is then to be reassembled by the receiving device. The cells, themselves, do not provide information indicating the source of the cells - e.g. they do not provide information sufficient to allow the cells to be reassembled into a frame unless the cell stream is received at the destination intact and without intervening cells from other streams. An example of such a cell stream is cells transmitted in accordance with ATM adaptation layer type 5 (AAL Type 5). AAL Type 5 implementations typically assure the cell streams are received intact by implementing a connection-oriented network. The design of AAL Type 5 for connection-oriented networks is described, for example, in Boisseau, An Introduction to ATM Technology, International Thompson Publishing, 1995 at page 43 where it states that:
The AAL type 5 function is adapted to a hardware implementation of the CPCS sublayer. Its advantage is that it uses the whole of the cells' payload and implements an effective protection of the data unit using a 32-bit CRC code. *However, it does not allow* cell-by-cell error detection or *multiplexing of several flows.* (Italicized emphasis added)

It is this issue of multiplexing of several flows which is of concern to the present invention.

In the described embodiment of the present invention the several flows (103, 104) are received at the switch 205 and buffered in buffers 201; 202, respectively. A frame accumulator 203 is provided which provides a pointer to the last cell in each frame (the end of frame). The switch, under control of a scheduler which schedules which input port is to be selected, selects an input buffer from which cells are obtained for transmission on the output port. In the described embodiment, the switch is advantageously designed to output cells from only a single input buffer until the end of frame cell in that buffer is reached at which time the switch may select another input buffer for service. In this way, the order of cells is preserved as shown in stream 206.

In certain embodiments, a pointer is not placed in the frame accumulator 203 until the EOF is detected in the cell stream and the input port is selected for output only when the pointer is placed in the frame accumulator. This has the advantage of providing a situation in which the entire stream is ready for retransmission on the output port before the output port is, essentially, reserved for that stream. In an alternative embodiment, an input port may be selected for output as soon as a first cell is received in the buffer. The selected input is then used until an EOF is detected. This provides the advantage of allowing cut-through processing of the cells - however, if cells in the stream are delayed, the effect is to essentially stall the output of the switch.

AAL Type 5 provides for two cell types: (1) end of frame (EOF); and (2) normal. The EOF cell type is specified in AAL Type 5 to be used at the edge device or destination to accommodate reassembly of cells into frames. In particular, the last bit of the PTI field in the cell header is set to 1 to indicate the last cell in a frame or data unit.

The described embodiment advantageously takes advantage of AAL Type 5 marking frame boundaries with the PTI field in order to allow the switch 205 to determine the frame boundaries.

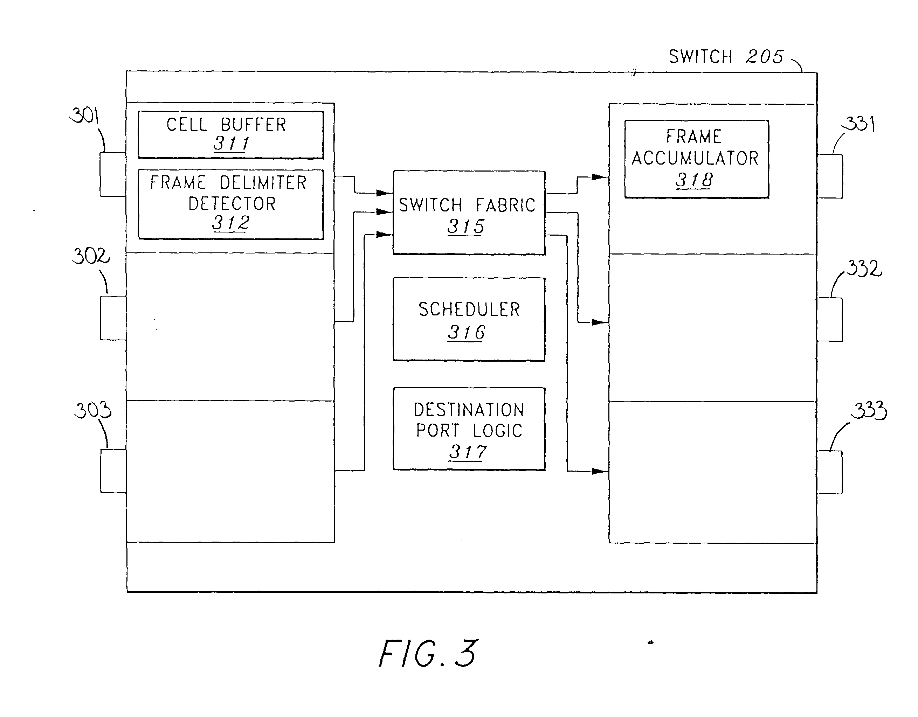

Although Figure 2 illustrates only two input ports and a single output port, switches with additional input ports and a plurality of output ports may be implemented without departure from the scope of the present invention. A preferred implementation with multiple ports is illustrated with reference to Figure 3.

As illustrated in Figure 3, each of input ports 301-303 comprise a buffer 311 which buffers incoming cells as has been described and a frame delimiter detector 312 which detects the EOF. As has been discussed, in one embodiment, the EOF is detected by detecting the payload type field or indicator (PTI) bit being set. Each of the inputs are coupled with a switching fabric 315. The switching fabric 315 is responsible for switching cells from a selected input port 301-303 to the appropriate output port 331-333. The output port is chosen in a conventional manner (e.g. input virtual channels are mapped to output ports and the VC of the cell is altered by the switch fabric) by destination port logic 317. In one embodiment, an entry is made in the appropriate frame accumulator 318 for the appropriate port 331-333 after an EOF is detected by frame delimiter detector 312. The scheduler 316 monitors the frame accumulators 318 for each port and schedules switching of cells from an input port buffer 311 to the output port on a first-in-first-out basis based on entries in the frame accumulator 318. As has been discussed, an alternative embodiment may provide for cut-through switching by choosing an input port before the entire stream of cells has arrived (and the EOF has been detected) at the input. The frame accumulator may provide a pointer to the entry in the buffer 311, as was described previously, indicating the location in the buffer of the EOF cell. Alternatively, the frame accumulator may simply provide a count of the number of cells in the frame or a copy of the EOF cell may be provided in the frame accumulator and compared with cells as they are transmitted on the output port in order to determine when the EOF is reached. Alternative embodiments may employ alternative techniques to locate the EOF when transmitting without departure from the scope of the present invention.

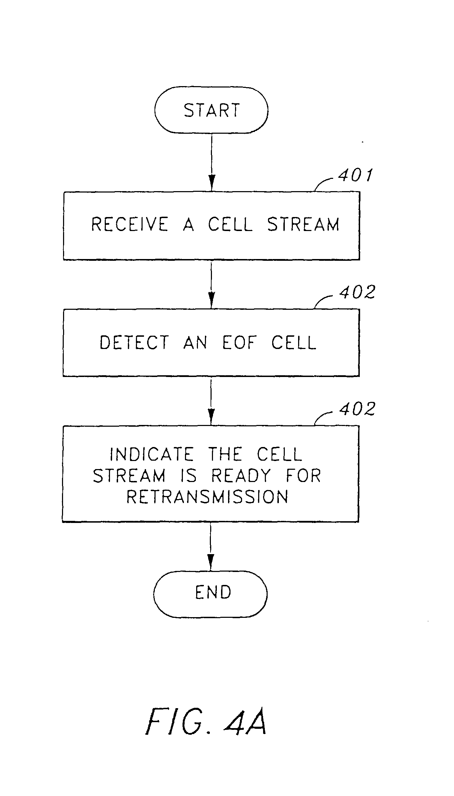

Figures 4(a)-(c) are helpful in illustrating overall methods of operation of a switch in accordance with the preferred embodiments of the present invention. Turning first to Figure 4(a), a stream of cells are received at an input port of a switch, block 401. The switch detects an EOF cell (such as by detecting the PTI bit being set as has been described, block 402), and then indicates the stream is ready for retransmission, block 403. In one embodiment, as has been described, the switch indicates the stream is ready for retransmission by placing an entry in a frame accumulator.

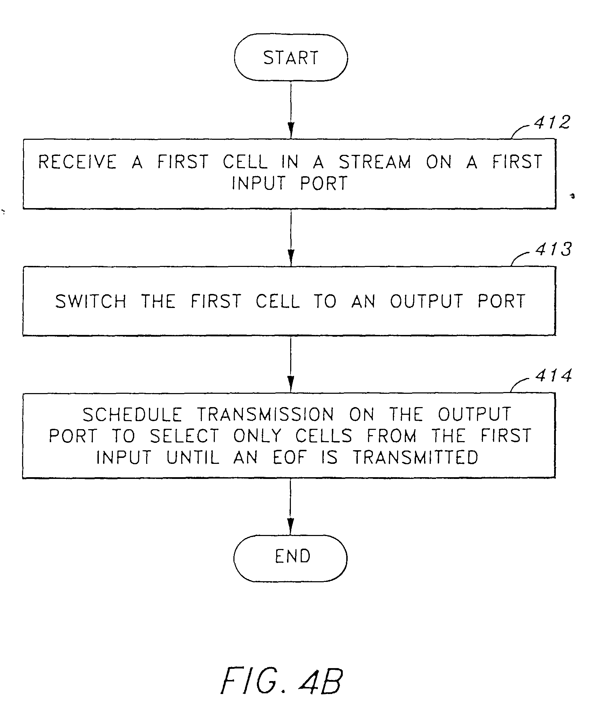

Figure 4(b) illustrates a cut-through method in which at least a first cell of a cell stream is received on a first input port of the switch, block 412. The switch switches the first cell, and additional cells, to an output port, block 413, but schedules transmission oin the output port to select only cells from the first input port until an EOF cell is detected in the cell stream received on the first port.

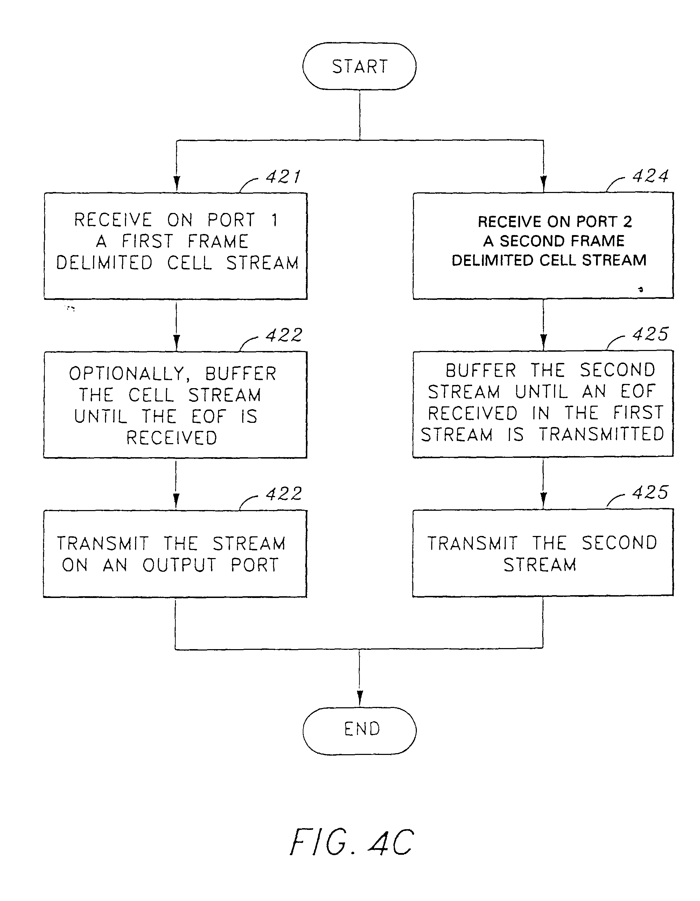

Finally, Figure 4(c) illustrates a method in which a first frame delimited stream of cells is received on a first port, block 421, and a second frame delimited stream of cells is received on second port, block 424. The stream on the second port is buffered until an EOF cell is detected for the stream on the first port and is transmitted on an output port, block 425. In the meantime, the stream on the first port may be optionally buffered until the EOF is detected, block 422. In any event, the stream on the first port is transmitted on the output port, block 423, and, after completion of transmitting the EOF cell from the stream on the first port, the second stream is transmitted on the output port, block 426. Shuffling of stream output transmissions between data on the first and second (or further) input ports then commences based on respective end of frame (EOF) indications. Of course, buffering is typically required in order to avoid interleaving of data at anything other than at the end of an output transmission from a contiguous but previously delimited stream of cells.

Thus, what has been disclosed a method and apparatus for switching frame delimited cells from multiplexed streams in a connectionless cell switched environment.

## Claims

1. A method of cell scheduling comprising:
receiving a cell stream having a plurality of cells of a first type and an end of frame cell;
detecting the end of frame cell; and
indicating the cell stream is ready for retransmission after detecting the end of frame cell.

2. The method as recited by claim 1, wherein the step of indicating the cell stream is ready for retransmission comprises writing an indicator to a frame accumulator.

3. The method as recited by claim 2, wherein the indicator is a pointer to an EOF cell in a buffer.

4. A method of switching cells comprising the steps of:
receiving a first cell in a frame delimited cell stream on a first input port of a switch;
switching the first cell to an output port of the switch; and
scheduling transmission on the output port of the switch to select only cells received on the first port until an EOF cell is detected in the cell stream.

5. A method of switching cells comprising the steps of:
receiving on a first port a first frame delimited cell stream, the first frame delimited cell stream destined for destination A;
receiving on a second port a second frame delimited cell stream, the second frame delimited cell stream destined for destination A; and
buffering the second frame delimited cell stream until a frame delimiter of the first frame delimited cell stream is transmitted on a third port.

6. The method as recited in any preceding claim wherein the cells are formatted in accordance with ATM adaptation layer type 5.

7. The method as recited in any preceding claim, wherein the end of frame cell is detected by detecting the PTI bit being set.

8. A cell switch comprising:
a first input port coupled to receive a first frame delimited cell stream;
a second input port coupled to receive a second frame delimited cell stream;
a buffer coupled to at least one input port for temporarily storing the frame delimited cell streams;
an end of frame detector coupled to examine cells received on the input ports;
an output port on which the first and second frame delimited cell streams are interleaved; and
a scheduler, responsive to the end of frame detector, coupled to control transmission of cells on the output port.

9. The cell switch of claim 8, further comprising:
a switch fabric arranged for switching cells from a selected input port of an appropriate output port.
